# FASCICULE DE BREVET EUROPEEN

(11) **EP 1 790 537 B1**
(45) Date de publication et mention de la délivrance du brevet: **07.01.2009**
(21) Numéro de dépôt: 06301163.9
(22) Date de dépôt: 21.11.2006
(51) Int. Cl.: B60R 21/231, B62D 25/04

(54) **Dispositif de protection latéral pour un véhicule, à sac gonflable et moyen de déviation de la sangle de limitation du déploiement de ce sac**
Seitenaufprall-Schutzeinrichtung für Fahrzeuge mit einem Airbag und Führungsmittel für ein Fangband zur Bregrenzung einer Airbagentfaltung
Side impact protection device for a vehicle comprising an airbag, and deflection means for a tether limiting deployment of the airbag

(30) Priorité: 29.11.2005 FR 0512081
(43) Date de publication de la demande: 30.05.2007
(73) Titulaire: Peugeot Citroën Automobiles, 78140 Velizy Villacoublay (FR)
(72) Inventeur: Bocquene, Alain, 78180 Montigny Le Bretonneux (FR)
(74) Mandataire: Couillard, Yann Luc Raymond

(56) Documents cités:
- EP-A- 1 510 414
- US-A1- 2004 130 129
- US-A1- 2004 178 608
- US-A1- 2005 134 029

## Description

L'invention concerne un dispositif permettant de protéger la tête d'un occupant d'un véhicule notamment automobile, comprenant un sac gonflable monté au-dessus d'une fenêtre latérale du véhicule et pouvant descendre au moins partiellement le long de la fenêtre lorsqu'il se gonfle en cas de choc latéral.

L'invention concerne également un véhicule équipé d'un tel dispositif.

On connaît déjà un tel dispositif dont le sac gonflable est logé à l'intérieur d'une structure latérale du pavillon du véhicule, s'étendant dans le prolongement d'un montant de baie du véhicule, lequel montant est doté d'une doublure vers l'habitacle du véhicule et d'une garniture fixée à la doublure. Ce dispositif connu comprend en outre une sangle de retenue du sac gonflé suite à un choc latéral, logée entre la garniture et la doublure du montant, et dont l'extrémité opposée à celle reliée au sac gonflable est solidaire dudit montant de baie.

Un tel dispositif est connu dans le document US 2004/0130129 A1 qui est considéré comme représentatif de l'état de la technique le plus proche et qui divulgue les caractéristiques du préambule de la revendication indépendante 1.

Dans le cas de véhicules pour lesquels les portes latérales sont dépourvues de cadre, tels que les véhicules de type coupé, le montant de baie longe une partie du bord supérieur de la fenêtre du véhicule. De la sorte, le montant de baie et sa garniture sont proches de cette fenêtre. Ainsi, lors du déploiement du sac, la sangle accompagnant les mouvements du sac le long de la fenêtre obturée ou non par la vitre, éjecte la garniture du montant dans l'habitacle, cette éjection pouvant même occasionner des blessures à l'occupant du véhicule.

L'invention a pour but de résoudre ce problème.

Pour atteindre ce but, l'invention propose un dispositif permettant de protéger la tête d'un occupant d'un véhicule automobile, comprenant un sac gonflable monté au dessus d'une fenêtre latérale du véhicule et pouvant descendre au moins partiellement le long de la fenêtre lorsqu'il se gonfle en cas de choc latéral, une sangle de retenue du sac gonflé dont l'extrémité opposée à celle reliée au sac gonflable est solidaire du montant de baie correspondant délimitant partiellement la fenêtre latérale, le montant de baie comprenant vers l'intérieur du véhicule une doublure solidaire de celui-ci et une garniture fixée à la doublure du montant, caractérisé en ce qu'il comprend une plaque longiligne solidaire de la doublure du montant de baie le long de celui-ci, en un emplacement permettant de confiner à l'état de repos la sangle de retenue du sac gonflable entre la garniture et la doublure de ce montant parallèlement à la direction longitudinale de ce montant, et de guider la sangle de retenue suivant une trajectoire ne rencontrant pas la garniture du montant lors du déploiement du sac gonflable.

Selon une autre caractéristique, la plaque longiligne maintient en position de repos la sangle de retenue en regard d'une ouverture s'étendant parallèlement à la direction longitudinale du montant.

Selon encore une autre caractéristique, l'ouverture longitudinale de passage de la sangle de retenue est définie entre un bord longitudinal de la garniture du montant et un bord en vis-à-vis de la doublure de ce montant.

Selon une autre caractéristique, la plaque longiligne de maintien et de guidage de la sangle de retenue constitue l'aile d'un profilé approximativement en forme de L, dont l'autre aile est solidaire de la doublure du montant.

Selon encore une autre caractéristique, la sangle de retenue à sa position de repos est en appui au moins partiellement le long de la plaque longiligne de maintien et de guidage.

Selon une autre caractéristique, l'invention concerne un véhicule automobile de type coupé équipé d'un dispositif de protection conforme aux dispositifs susmentionnés.

L'invention sera maintenant décrite plus en détail, et en référence aux figures annexées qui en illustrent un mode de réalisation à titre d'exemple non limitatif, parmi lesquelles :

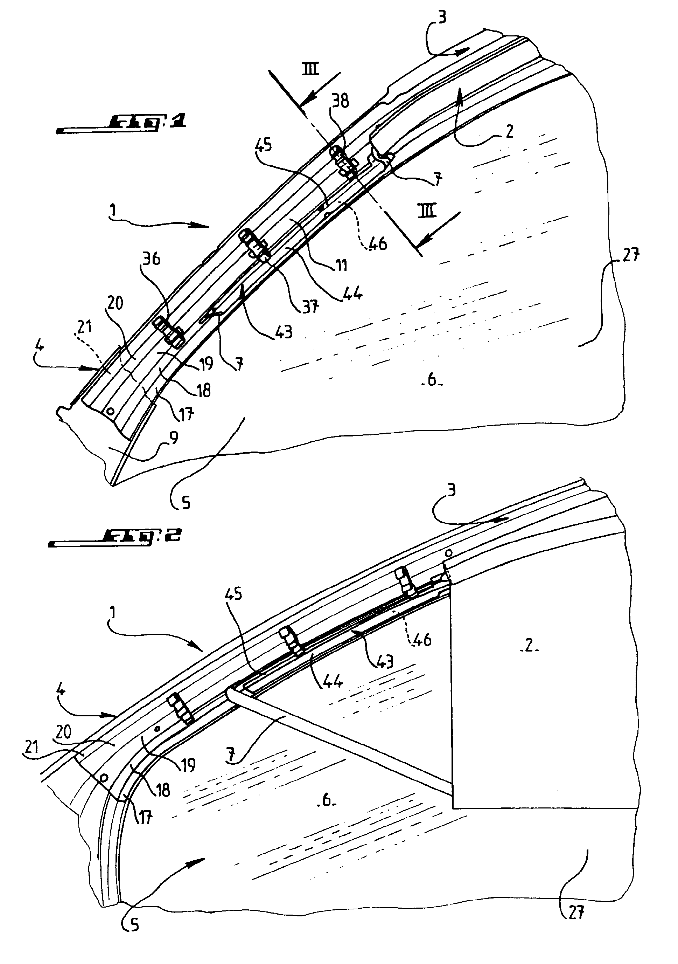

- la figure 1 est une vue en perspective d'un montant de baie d'un véhicule de type coupé et pourvu d'un moyen de déviation d'une sangle de retenue d'un sac gonflable ;
- la figure 2 est une vue en perspective semblable à celle de la figure 1, et montrant la position de la sangle suite au déploiement du sac gonflable ;
- la figure 3 est une vue agrandie en coupe selon la ligne III-III de la figure 1 .

Le dispositif de sécurité 1 représenté aux figures est destiné à protéger la tête d'un occupant d'un siège avant d'un véhicule automobile en cas de choc latéral, mais est adaptable pour protéger également un occupant d'un siège arrière.

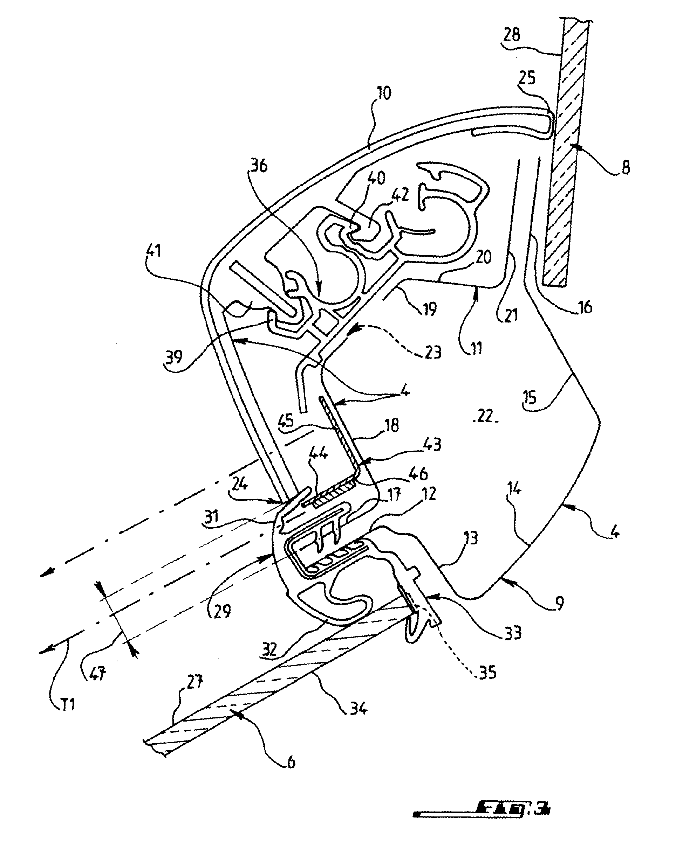

Le dispositif 1 comprend un sac gonflable de sécurité 2 logé en position inactive à l'intérieur d'une structure du pavillon 3 du véhicule s'étendant dans le prolongement d'un montant de baie latéral 4, au-dessus d'une fenêtre 5 du véhicule pouvant être fermée par une vitre 6. Comme visible à la figure 3, on peut voir que la vitre ne comporte pas de cadre. Cela signifie qu'il n'y a pas de pièce interposée entre la vitre 6 et la structure du montant de baie à part, bien évidemment, un dispositif d'étanchéité.

Le sac 2 est du type « rideau », c'est-à-dire qu'il présente dans sa position déployée une forme générale parallélépipédique recouvrant partiellement selon un plan sensiblement vertical le haut de la fenêtre latérale avant 5 obturée ou non par la vitre 6.

Le dispositif 1 comprend une sangle 7 de limitation du déploiement du sac 2, permettant de maintenir le sac 2 dans une position verticale de protection, y compris lorsque la vitre 6 de la fenêtre 5 est abaissée.

Cette sangle 7 a l'une de ses extrémités rigidement solidaire d'une partie basse du sac 2 dans sa position déployée, son extrémité opposée étant fixée rigidement au montant 4.

Le montant 4 s'étend en arrière du véhicule, en bordant le côté correspondant du pare-brise 8 pour délimiter avec la structure du pavillon 3 la partie supérieure de la fenêtre 5.

Le montant 4 est constitué par l'assemblage par exemple de trois profilés, définissant respectivement une paroi externe 9, et vers l'intérieur du véhicule une garniture 10 et une doublure 11 interposée entre la paroi externe 9 et la garniture 10 du montant 4.

La paroi externe 9 du montant 4 est une pièce unique comprenant cinq pans 12 à 16 dont trois pans externes 13 à 15 présentent en section transversale approximativement une forme générale de C et deux pans 12 et 16 prolongeant respectivement les deux pans latéraux 13 et 15, le pan 12 étant parallèle et en regard d'une partie de la face interne 27 de la vitre 6, tandis que le pan 16 longe en partie la face interne 28 du pare-brise 8 et s'étend parallèlement à celui-ci.

La doublure 11 présente une forme générale analogue à celle de la paroi externe 9 comprenant cinq pans 17 à 21 et est disposée en vis à vis de celle-ci de façon à définir entre elles une cavité 22.

Le pan central 19 de la doublure 11 comprend une ouverture 23 destinée à coopérer avec un élément complémentaire de la garniture 10 pour assurer la solidarisation de la garniture 10 à la doublure 11.

La garniture 10 présente en section transversale une forme générale de L s'étendant entre la face interne de la vitre 6 lorsque celle-ci occupe sa position de fermeture et la face interne du pare-brise 8. La garniture 10 a l'un 24 de ses deux bords 24, 25 en regard de la vitre 6 sensiblement parallèlement à la face interne 27 de la vitre 6, alors que le bord opposé 25 est sensiblement parallèle à la face interne 28 du pare-brise 8 et plaqué contre celui-ci.

Le pan 12 de la paroi externe 9 est disposé entre la vitre 6 et le bord 24 de la garniture 10. Le bord opposé 25 de la garniture 10 est sensiblement parallèle à la face interne 28 du pare-brise 8 en étant en appui sur cette face 28.

Un joint d'étanchéité 29 est solidarisé aux pans 17 et 12 respectivement de la doublure 11 et de la paroi externe 9 et comporte deux lèvres opposées d'étanchéité 31, 32 en appui respectivement sur le bord 24 de la garniture 10 et sur la face interne 27 de la vitre 6 lorsque cette dernière est relevée à sa position de fermeture de la fenêtre 5.

Le joint d'étanchéité 29 comporte une troisième lèvre 33 recouvrant la face externe 34 de la vitre 6 au niveau de son bord supérieur 35, en position de fermeture de la porte.

Ainsi, le joint 31 comble l'espace de façon étanche entre la garniture 10 et la vitre 6.

La solidarisation de la garniture 10 à la doublure 11 est réalisée au moyen d'agrafes 36 à 38, par exemple au nombre de trois, solidaires de la doublure 11 par tout moyen approprié et le long de celle-ci.

Chaque agrafe 36 à 38 comporte à la fois des parties évidées et en crochet 39, 40 auxquelles peuvent se fixer par encliquetage des parties de forme complémentaire 41, 42 de la garniture 10.

Selon l'invention, le dispositif de protection 1 comprend un élément de guidage 43 en un matériau rigide, solidaire de la doublure 11, permettant de guider et de dévier la sangle de retenue 7 suivant une trajectoire ne rencontrant pas la garniture 10 du montant 4 lors du déploiement du sac gonflable 2.

De préférence, cet élément de guidage 43 présente une forme générale d'un profilé s'étendant suivant la direction principale du montant 4, comprenant une plaque longiligne 44 de maintien de la sangle 7 à sa position inactive et une plaque de fixation 45 à la doublure 11 du montant 4, ces deux plaques 44, 45 définissant en section transversale une forme générale de L.

L'élément de guidage 43 est fixé à la doublure 11 du montant 4 par sa plaque de fixation 45 de sorte que la plaque 44 maintienne la sangle 7 parallèlement à la direction principale du montant 4 et par conséquent, parallèlement à la direction de la vitre 6 en position de fermeture de la porte.

Plus précisément, la plaque de fixation 45 de l'élément 43 est maintenue sur toute sa longueur contre le pan 18 de la doublure 11, en étant rigidement solidarisée à celui-ci par tout moyen approprié, alors que la plaque de maintien 44 s'étend parallèlement au pan 17 de la doublure 11 du montant.

La sangle 7 est maintenue tendue contre une face 46 de la plaque de maintien 44 située en regard du pan 17 de la doublure 11, sensiblement parallèlement à la direction principale du montant 4, dans un espace longitudinal 47 au montant 4, défini entre le bord 24 de la garniture 10 et le pan 17 de la doublure 11.

De la sorte, lors du déploiement du sac 2, la sangle 7 est guidée par traction dans l'espace longitudinal 47, le long de la plaque 44 suivant la trajectoire indiquée par le sens T1, pour s'échapper dans l'habitacle du véhicule dans un plan sensiblement parallèle à la direction longitudinale du montant 4.

Bien entendu, la sortie de la sangle 7 hors de l'espace longitudinal 47 force la lèvre 31 à se désengager élastiquement du bord 24 de la garniture 10.

## Revendications

1. Dispositif permettant de protéger la tête d'un occupant d'un véhicule notamment automobile, comprenant un sac gonflable (2) monté au dessus d'une fenêtre latérale (5) du véhicule et pouvant descendre au moins partiellement le long de la fenêtre (5) lorsqu'il se gonfle en cas de choc latéral, une sangle de retenue (7) du sac gonflé (2) dont l'extrémité opposée à celle reliée au sac gonflable (2) est solidaire du montant de baie (4) correspondant délimitant partiellement la fenêtre latérale (5), le montant de baie (4) comprenant vers l'intérieur du véhicule une doublure (11) solidaire de celui-ci et une garniture (10) fixée à la doublure (11) du montant (4), le dispositif comprenant de plus une plaque longiligne (44) solidaire de la doublure (11) du montant de baie (4) le long de celui-ci, en un emplacement permettant de confiner à l'état de repos la sangle de retenue (7) du sac gonflable (2) entre la garniture (10) et la doublure (11) de ce montant (4) parallèlement à la direction longitudinale de ce montant (4), **caractérisé en ce que** la sangle de retenue (7) est guidée suivant une trajectoire ne rencontrant pas la garniture (10) du montant (4) lors du déploiement du sac gonflable (2).

2. Dispositif selon la revendication 1, **caractérisé en ce que** la plaque longiligne (44) maintient en position de repos la sangle de retenue (7) en regard d'une ouverture (47) s'étendant parallèlement à la direction longitudinale du montant (4).

3. Dispositif selon la revendication 2, **caractérisé en ce que** l'ouverture longitudinale (47) de passage de la sangle de retenue (7) est définie entre un bord longitudinal (24) de la garniture (10) du montant (4) et un bord (17) en vis-à-vis de la doublure (11) de ce montant (4).

4. Dispositif selon l'une des revendications précédentes **caractérisé en ce que** la plaque longiligne de maintien et de guidage (44) de la sangle de retenue (7) constitue l'aile d'un profilé approximativement en forme de L, dont l'autre aile (45) est solidaire de la doublure (11) du montant (4).

5. Dispositif selon l'une des revendications précédentes, **caractérisé en ce que** la sangle de retenue (7) à sa position de repos est en appui au moins partiellement le long de la plaque longiligne de maintien et de guidage (44).

6. Véhicule automobile de type coupé **caractérisé en ce qu'**il est équipé d'un dispositif de protection (1) conforme à l'une des revendications 1 à 5.

## Claims

1. Device for protecting the head of a vehicle occupant, particularly a motor vehicle occupant, comprising an airbag (2) installed above a side window (5) of the vehicle and able to drop down at least partially along the window (5) when it inflates in the event of a side impact, a tether (7) for retaining the inflated airbag (2), the end of which opposite that connected to the airbag (2) is secured to the corresponding window pillar (4) partially delimiting the side window (5), the window pillar (4) having, facing the interior of the vehicle, a lining (11) secured to the latter and a trim (10) attached to the lining (11) of the pillar (4), the device also comprising an elongate plate (44) secured to the lining (11) of the window pillar (4) along the latter, in a location where it is able to confine the tether (7) retaining the airbag (2) in the rest state between the trim (10) and the lining (11) of this pillar (4) parallel to the longitudinal direction of this pillar (4), **characterized in that** the retaining tether (7) is guided along a trajectory such that it does not come into contact with the trim (10) of the pillar (4) during the deployment of the airbag (2).

2. Device according to Claim 1, **characterized in that** the elongate plate (44) holds the retaining tether (44) in the rest position adjacent to an opening (47) extending parallel to the longitudinal direction of the pillar (4).

3. Device according to Claim 2, **characterized in that** the longitudinal opening (47) for the retaining tether (7) to pass through is defined between a longitudinal edge (24) of the trim (10) of the pillar (4) and an edge (17) facing the lining (11) of this pillar (4).

4. Device according to one of the preceding claims, **characterized in that** the elongate plate (44) holding and guiding the retaining tether (7) constitutes the wing of an approximately L-shaped section, the other wing (45) of which is secured to the lining (11) of the pillar (4).

5. Device according to one of the preceding claims, **characterized in that,** in its rest position, the retaining tether (7) bears at least partially along the elongate holding and guiding plate (44).

6. Motor vehicle of the coupé type, **characterized in that** it is equipped with a protection device (1) in accordance with one of Claims 1 to 5.

## Patentansprüche

1. Vorrichtung, die es erlaubt, den Kopf eines Insassen eines Fahrzeugs, insbesondere eines Kraftfahrzeugs, zu schützen, die einen aufblasbaren Sack (2) aufweist, der über einem Seitenfenster (5) des Fahrzeugs installiert ist und sich zumindest teilweise entlang des Fensters (5) senken kann, wenn er sich bei einem Seitenaufprall aufbläst, ein Fangband (7) des aufgeblasenen Sacks (2), dessen Ende, das dem entgegen gesetzt ist, das mit dem aufblasbaren Sack (2) verbunden ist, fest mit dem entsprechenden Fensteröffnungspfosten (4), der teilweise das Seitenfenster (5) abgrenzt, verbunden ist, wobei der Fensteröffnungspfosten (4) in das Innere des Fahrzeugs hinein eine Verkleidung (11) aufweist, die fest mit diesem verbunden ist, und eine Packung (10), die an der Verkleidung (11) des Pfostens (4) befestigt ist, wobei die Vorrichtung ferner eine lange Platte (44), die fest mit der Verkleidung (11) des Fensteröffnungspfostens (4) entlang dieses verbunden ist, an einer Stelle aufweist, die es erlaubt, im Ruhezustand das Fangband (7) des aufblasbaren Sacks (2) zwischen der Packung (10) und der Verkleidung (11) dieses Pfostens (4) parallel zu der Längsrichtung dieses Pfostens (4) einzuschränken, **dadurch gekennzeichnet, dass** das Fangband (7) entlang eines Verlaufs geführt wird, der beim Aufblasen des aufblasbaren Sacks (2) nicht auf die Packung (10) des Pfostens (4) trifft.

2. Vorrichtung nach Anspruch 1, **dadurch gekennzeichnet, dass** die lange Platte (44) das Fangband (7) gegenüber einer Öffnung (47), die sich parallel zu der Längsrichtung des Pfostens (4) erstreckt, in Ruhestellung hält.

3. Vorrichtung nach Anspruch 2, **dadurch gekennzeichnet, dass** die längliche Öffnung (47) zum Durchgehen des Fangbands (7) zwischen einem Längsrand (24) der Packung (10) des Pfostens (4) und einem Rand (17) in Gegenüberlage zu der Verkleidung (11) dieses Pfostens (4) definiert ist.

4. Vorrichtung nach einem der vorhergehenden Ansprüche, **dadurch gekennzeichnet, dass** die lange Platte zum Halten und Führen (44) des Fangbands (7) den Flügel eines Profils mit in etwa L-Form bildet, dessen anderer Flügel (45) fest mit der Verkleidung (11) des Pfostens (4) verbunden ist.

5. Vorrichtung nach einem der vorhergehenden Ansprüche, **dadurch gekennzeichnet, dass** das Fangband (7) an seiner Ruhestellung zumindest teilweise entlang der langen Halte- und Führungsplatte (44) aufliegt.

6. Kraftfahrzeug des Typs Coupé, **dadurch gekennzeichnet, dass** es mit einer Schutzvorrichtung (1) gemäß einem der Ansprüche 1 bis 5 ausgestattet ist.
